# EUROPÄISCHE PATENTSCHRIFT

(11) **EP 4 174 426 B1**
(45) Veröffentlichungstag und Bekanntmachung des Hinweises auf die Patenterteilung: **09.07.2025**
(21) Anmeldenummer: 22200425.1
(22) Anmeldetag: 07.10.2022
(51) Int. Cl.: F28C 3/06

(54) **VORRICHTUNG ZUM KÜHLEN VON FLÜSSIGKEITEN**
DEVICE FOR COOLING LIQUIDS
DISPOSITIF DE REFROIDISSEMENT DE LIQUIDES

(30) Priorität: 27.10.2021 DE 102021005341
(43) Veröffentlichungstag der Anmeldung: 03.05.2023
(73) Patentinhaber: Messer SE & Co. KGaA, 65812 Bad Soden (DE); Messer Austria GmbH, 2352 Gumpoldskirchen (AT)
(72) Erfinder: Tauchmann, Jens, 47259 Duisburg (DE); Hatz, Gottfried, 8431 Gralla (AT)

(56) Entgegenhaltungen:
- AU-A1- 2015 226 846
- FR-A- 1 530 663
- US-A- 3 672 182
- US-A- 5 140 822

## Beschreibung

Die Erfindung betrifft eine Vorrichtung zum Kühlen von Flüssigkeiten durch Wärmekontakt mit einem kryogenen Medium, mit einem Behälter zum Aufnehmen eines Flüssigkeitsbades einer zur kühlenden Flüssigkeit, mit einem im Flüssigkeitsbad angeordneten Wärmetauscher zum Kühlen der Flüssigkeit durch Wärmetausch mit einem verflüssigten kryogenen Kühlmedium, welcher Wärmetauscher mit einer Zuleitung und einer Ausleitung für das Kühlmedium sowie mit einer Wärmetauscherfläche zum indirekten Wärmetausch von Flüssigkeit und Kühlmedium ausgerüstet ist.

Es besteht in vielen technischen Gebieten die Notwendigkeit, Flüssigkeiten verschiedenster Art auf einer vorgegebenen Höchsttemperatur vorrätig zu halten oder zur weiteren Verarbeitung auf eine vorgegebene Temperatur zu kühlen.

Beispielsweise wird die Temperatur von Frischbeton auf Grund von gesetzlichen Empfehlungen, Vorschriften und Richtlinien sowie projektgebundenen Vorgaben in vielen Ländern zunehmend begrenzt, um Temperaturspannungsrisse zu vermeiden, die die Druckfestigkeit des Betons und die Langlebigkeit des Bauwerkes mindern können. Eine Möglichkeit zur Temperaturkontrolle des Frischbetons besteht in der Kühlung des für die Herstellung des Frischbetons eingesetzten Zugabewassers, das dazu auf einen Wert von beispielsweise knapp über 0°C gebracht wird. Hierzu finden derzeit Kühlsysteme auf elektrischer Basis oder auch unter Verwendung von Flüssigstickstoff Verwendung.

Bei der Kühlung mittels eines kryogenen Kühlmediums, wie beispielsweise flüssiger Stickstoff, wird dieser entweder direkt, etwa mittels Lanzen, in die Flüssigkeit eingetragen, oder es erfolgt eine indirekte Kühlung an einer Wärmetauscherfläche eines Wärmetauschers, wobei die zu kühlende Flüssigkeit mittels Pumpen, Rührwerken oder sonstiger Agitatoren in beständige Bewegung gebracht wird, um eine möglichst gleichmäßige Kühlung der Flüssigkeit sicherzustellen und eine Vereisung der Wärmetauscherfläche zu verhindern.

Die WO 2012/010705 A1 beschreibt ein Verfahren, bei dem ein kälteverflüssigtes Gas über eine Düse direkt in das zur Kühlung von Frischbeton eingesetzte Prozesswasser eingebracht wird, wobei zumindest ein Teil des Zugabewassers zu Eis gefriert.

Aus der DE 3 828 136 A1 ist bekannt, eine Flüssigkeit dadurch zu kühlen, dass ein verflüssigtes Gas über eine Düse direkt in den Bodenbereich des Behälters eingetragen wird, in dem die Flüssigkeit gespeichert ist.

Aus der EP 2 142 862 B1 ist ein Verfahren zum Kühlen von Wasser bekannt, bei dem ein kälteverflüssigtes Gas tropfenweise in das Wasser eingespritzt wird, sodass eine Suspension aus ungefrorenem und gefrorenem Wasser gebildet wird, die als Prozesswasser in der Betonherstellung eingesetzt wird.

Nachteilig bei diesen Systemen, in denen verflüssigtes Gas direkt in das Prozesswasser eingespeist wird, ist jedoch, dass die Gefahr einer Vereisung am Eintragspunkt des verflüssigten Gases besteht, die die Funktionsfähigkeit der Apparatur insgesamt beeinträchtigen kann.

US 5 140 822 A offenbart eine Vorrichtung gemäß dem Oberbegriff von Anspruch 1.

Aus der DE 10 2005 039 570 A1 ist ein Verfahren zum Kühlen von Zuschlagstoffen der Betonherstellung, insbesondere des dabei zum Einsatz kommenden Zugabewassers, bekannt. Dabei kommt flüssiger Stickstoff als Kühlmedium zum Einsatz, der verdampft und als kaltes Gas dem Zugabewasser zugeführt wird. Die Verdampfungsenthalpie des Stickstoffs wird dabei zusätzlich zur Kühlung des Zugabewassers genutzt, indem der flüssige Stickstoff zunächst einen vom Zugabewasser umströmten Wärmetauscher durchläuft und dabei verdampft. Durch die vorherige Verdampfung des Flüssigstickstoffs ist die Gefahr einer Vereisung am Eintragspunkt des Gases zumindest reduziert.

Die in der DE 10 2005 039 570 A1 zur apparatetechnischen Umsetzung des dort beschriebenen Verfahrens genannten herkömmlichen Wärmetauscher sind jedoch für den Energietransport zwischen den Medien Flüssigstickstoff und Wasser nur wenig geeignet. Aufgrund der tiefen Temperaturen des Stickstoffs kann es zur Eisbildung an den das Kühlmedium führenden Rohren des Wärmetauschers und, bei einem nur geringen Abstand zwischen diesen Rohren, zur Vereisung des gesamten Wärmetauschers kommen, was mit einem starken Leistungsverlust einhergeht. Um eine derartige Vereisung zu verhindern, muss in der Flüssigkeit eine beträchtliche Strömungsgeschwindigkeit erzeugt werden. Es hat sich jedoch gezeigt, dass die von Rührwerken oder Pumpen erzeugte Strömungsgeschwindigkeit meist zu gering ist, um bei einem Wärmeübergang von Wasser zu flüssigem Stickstoff eine Vereisung der Wärmetauscherrohre wirksam zu verhindern. Der Einsatz von Agitatoren mit entsprechend ausreichender Leistung ist wiederum in vielen Fällen wirtschaftlich nicht darstellbar.

Der Erfindung liegt daher die Aufgabe zu Grunde, eine Vorrichtung zum Kühlen von Flüssigkeiten, insbesondere eine Vorrichtung zum Kühlen von Zugabewasser bei der Herstellung von Frischbeton, zu schaffen, bei der die Gefahr von Vereisungen gegenüber den Gegenständen nach dem Stande der Technik weiter reduziert ist.

Gelöst ist diese Aufgabe durch eine Vorrichtung mit den Merkmalen des Patentanspruchs 1.

Vorteilhafte Ausgestaltungen der Erfindung sind in den Unteransprüchen angegeben.

Eine erfindungsgemäße Vorrichtung der eingangs genannten Art und Zweckbestimmung ist also dadurch gekennzeichnet, dass die Ausleitung für das Kühlmedium mit einer unterhalb der Wärmetauscherfläche in das Flüssigkeitsbad ausmündenden Eintragseinrichtung zum Eintragen von verdampftem Kühlmedium in die Flüssigkeit strömungsverbunden ist.

Erfindungsgemäß wird also die Kälte des kryogenen Kühlmediums doppelt genutzt und gleichzeitig die beim Eintragen des gasförmigen Kältemittels im Flüssigkeitsbad entstehende Strömung zum Verhindern einer Vereisung der Wärmetauscherfläche genutzt. Zum einen nimmt das im Wärmetauscher strömende flüssige Kühlmedium Wärme aus dem umgebenden Flüssigkeitsbad auf, wobei es zumindest teilweise verdampft. Zum anderen wird das anschließend immer noch auf einer vergleichsweise niedrigen Temperatur vorliegende verdampfte Kühlmedium zumindest teilweise an der Eintragseinrichtung in die Flüssigkeit selbst eingespeist. Die Eintragseinrichtung ist dabei geodätisch unterhalb der Wärmetauscherfläche angeordnet und mit wenigstens einer Austrittsöffnung ausgerüstet, aus der das verdampfte Kühlmedium austritt und anschließend in Form von Gasblasen in der Flüssigkeit aufsteigt. Die aufsteigenden Gasblasen führen zum einen zu einer aufwärts gerichteten Strömung im Flüssigkeitsbad, die zu einer homogenen Durchmischung der Flüssigkeit und zu einer gleichmäßigen Temperaturverteilung führt. Gleichzeitig umströmen die aufsteigenden Gasblasen die Wärmetauscherfläche und verhindern bzw. reduzieren die Ausbildung einer Eisschicht auf der Oberfläche des Wärmetauschers. Auf Einrichtungen wie Rührwerke oder dergleichen zum Durchmischen der Flüssigkeit oder längere Betriebspausen zum Enteisen der Wärmetauscherfläche kann somit verzichtet werden.

Bei der Wärmetauscherfläche handelt es sich bevorzugt um einen Rohrwärmetauscher, bei dem der Wärmeübertrag an einem Rohr oder an mehreren Rohren mit thermisch gut leitenden Wänden (Wärmetauscherrohre) erfolgt, die vom Kühlmedium durchflossen und von der zu kühlenden Flüssigkeit umströmt werden. Beispielsweise umfasst die Wärmetauscherfläche eine Rohrschlange mit einer oder mehreren Windungen und/oder eine Mehrzahl von parallel zueinander angeordneten Wärmetauscherrohren. Zur Verbesserung der Wärmeübertragung kann das Rohr bzw. können die Rohre oder einzelne Abschnitte davon als Rippenrohr ausgebildet sein. Um eine effektive Umströmung der Wärmetauscherfläche durch die aufsteigenden Gasblasen des eingetragenen gasförmigen Kühlmediums im Flüssigkeitsbad zu ermöglichen, sind die Rohre oder Rohrabschnitte oder Windungen beabstandet voneinander angeordnet.

In einer besonders bevorzugten Ausgestaltung der Erfindung umfasst die Wärmetauscherfläche eine im Flüssigkeitsbad angeordnete Rohrschlange, die eine oder mehrere Windungen aufweist, die spiral- oder schraubenförmig um eine vertikal oder schräg nach oben angeordnete Achse verlaufen. Die einzelnen Windungen können dabei jeweils einen gleichen Querschnitt aufweisen, sodass die Rohrschlange insgesamt eine - ggf. schräge - zylinderförmige Gestalt hat. Alternativ können die Windungen jeweils unterschiedliche Querschnittsflächen aufweisen; insbesondere können die Querschnittsflächen der Windungen von unten nach oben kontinuierlich zu- oder abnehmen, sodass die Rohrschlange insgesamt eine - ggf. schräge - kegel- oder pyramidenförmige Gestalt besitzt, mit einem Öffnungswinkel von beispielsweise zwischen 20° und 45°, bevorzugt zwischen 25° und 60°. Die Querschnitte der einzelnen Windungen können kreisförmig oder von anderer Geometrie sein, beispielsweise oval oder viereckig.

Die einzelnen Windungen der bevorzugt aus einem Rippenrohr aufgebauten Rohrschlange sind voneinander beabstandet angeordnet. Beispielsweise besteht zwischen den Windungen ein vertikaler Abstand zwischen 0,2 Rohrdurchmessern und einem Rohrdurchmesser. Beträgt beispielsweise der Rohrdurchmesser bei einer zur Kühlung von beispielsweise Zugabewasser eingesetzten Vorrichtung zwischen 20 mm und 50 mm, sollte auch der Abstand zwischen den Windungen bei einer zylinderförmigen Rohrschlange mindestens 5 mm bis 50 mm betragen. Geringere Abstände sind besonders bei flach konischen oder pyramidenförmig verlaufenden Rohrschlange geeignet, da hier die von den aufsteigenden Gasblasen des eingetragenen Kühlmediums induzierte aufsteigende Strömung im Flüssigkeitsbad alle Windungen direkt umspülen kann.

Bevorzugt sind im Behälter Mittel vorgesehen, um eine durch das Einleiten des Kühlmediums im Flüssigkeitsbad induzierte Strömung in Richtung auf die Windungen der Rohrschlange zu leiten. Dabei handelt es sich bevorzugt um ein passives Strömungselement. Beispielsweise handelt es sich um einen innerhalb der Rohrschlange angeordneten Körper in Form eines mit seiner Spitze nach unten weisenden Kegels. Durch einen solchen Kegel wird die innerhalb der Rohrschlange aufsteigende Strömung in radiale Richtung abgelenkt, also in Richtung auf das umlaufende Rohr der Rohrschlange. Eine solche Ausgestaltung ist insbesondere für Ausgestaltungen der Erfindung vorteilhaft, die eine vertikal im Flüssigkeitsbad angeordnete zylindrische Rohrschlange als Wärmetauscherfläche aufweist.

Bei der Eintragseinrichtung handelt es sich beispielsweise um ein rohrförmiges oder flächiges Element, das mit einer Austrittsöffnung oder mehreren Austrittsöffnungen zur Erzeugung von in der Flüssigkeit aufsteigenden Gasblasen ausgerüstet ist. Die Austrittsöffnung/en ist/sind bevorzugt so in der Eintragseinrichtung angeordnet, dass ein möglichst großer Teil der Oberfläche der Wärmetauscherfläche von den aufsteigenden Gasblasen umspült wird. Beispielsweise handelt es sich bei der oder den Austrittsöffnung/en jeweils um eine einfache Bohrung im Mantel der im Übrigen als Hohlkörper ausgebildeten Eintragseinrichtung. Die Austrittsöffnung/en kann/können auch Teil einer beispielsweise auf die Wärmetauscherfläche gerichteten Düse sein. Die Eintragseinrichtung kann auch mit strömungsfördernden Elementen ausgerüstet sein, beispielsweise mit einer Venturidüse, die im Behälter vor der Mündung der Austrittsöffnung oder der Düse angeordnet ist.

In einer anderen vorteilhaften Ausgestaltung handelt es sich bei der Eintragseinrichtung um einen Sinterkörper aus Metall, Keramik oder Kunststoff dessen Porenöffnungen die Austrittsöffnungen darstellen.

Zweckmäßigerweise ist als Strömungsverbindung zwischen der Ausleitung des Wärmetauschers und der Eintragseinrichtung eine Verbindungsleitung vorgesehen, die abschnittsweise oberhalb eines Flüssigkeitsbades im Behälter verläuft; das zumindest teilverdampfte Kühlmedium wird also abschnittsweise geodätisch oberhalb einer im Einsatz der Vorrichtung vorgesehenen Füllhöhe der Flüssigkeit im Behälter geführt. Dadurch wird sichergestellt, dass in Betriebspausen der Vorrichtung keine Flüssigkeit in den Wärmetauscher eindringen kann, die nach Wiederaufnahme des Betriebs dort gefrieren führen kann.

Alternativ oder ergänzend dazu können in der Verbindungsleitung und/oder der Eintragseinrichtung auch Mittel zum Verhindern einer Rückströmung von Flüssigkeit aus dem Flüssigkeitsbad vorgesehen sein, beispielsweise Klappen oder Rückschlagventile, die in der Verbindungsleitung oder der Eintragseinrichtung angeordnet sind, um zu verhindern, dass während einer Betriebspause oder während einer nur geringen Zufuhr an Kühlmedium Flüssigkeit eindringen kann. Ebenso kann/können die Austrittsöffnung/en der Eintragseinrichtung bevorzugt jeweils mit einem selbstschließenden Ventil, einer Klappe oder mit einem flüssigkeitsdichten, jedoch gasdurchlässigen Sinterkörper ausgerüstet sein.

Als Behälter kann ein offener Behälter vorgesehen sein, beispielsweise ein Becken oder ein Teich. Die Ausgestaltung des Behälters als geschlossener, mit einem an eine Gasableitung angeschlossenen Behälter ist jedoch bevorzugt, da in diesem Fall der austretende Gasfluss kontrolliert abgeführt werden kann.

Um die Temperatur der Flüssigkeit steuern zu können, sieht eine vorteilhafte Ausgestaltung der Erfindung vor, dass die Vorrichtung mit einer Regeleinrichtung ausgerüstet ist. Die Regeleinrichtung umfasst ein oder mehrere ansteuerbare Ventile, mittels denen der Fluss des Kühlmediums durch den Wärmetauscher und/oder der Anteil des dem Eintragssystem zugeführten verdampften Kühlmediums einstellbar ist, eine Messeinrichtung zur Messung wenigstens eines Betriebsparametes, wie beispielsweise der Temperatur der Flüssigkeit oder des Auftretens von Vereisungen oder der Dicke einer etwaigen Eisschicht, und eine Steuereinheit, mittels der das Ventil oder die Ventile in Abhängigkeit des gemessenen Betriebsparameters oder der gemessenen Betriebsparameter angesteuert werden kann/können.

Bei der zu kühlenden Flüssigkeit handelt es sich bevorzugt um Wasser oder ein wässerige Medium, insbesondere um Zugabewasser für die Herstellung von Frischbeton. Beim kryogenen Kühlmedium handelt es sich bevorzugt um flüssigen Stickstoff oder ein anderes Medium im tiefkalt verflüssigten Zustand.

Die erfindungsgemäße Vorrichtung kommt bevorzugt zur Kühlung von Zugabewasser bei der Herstellung von Frischbeton zum Einsatz.

Anhand der Zeichnungen sollen Ausführungsbeispiele der Erfindung näher erläutert werden. In schematischen Ansichten zeigen:

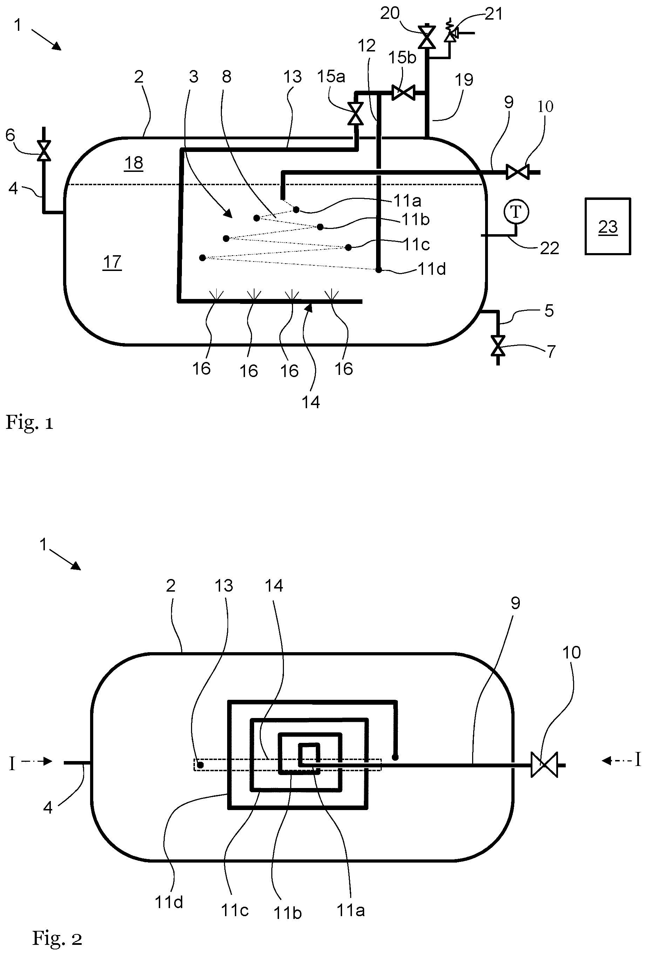

Fig. 1: Eine erfindungsgemäße Vorrichtung in einem Längsschnitt entlang der Schnittlinie I - I in Fig. 2,
Fig. 2: Die erfindungsgemäße Vorrichtung aus Fig. 1 in einer Draufsicht von oben bei geöffnetem Behälter,
Fig. 3: Die Wärmetauscherfläche einer erfindungsgemäßen Vorrichtung in einer anderen Ausführungsform im Längsschnitt.

Die in den Zeichnungen gezeigte erfindungsgemäße Vorrichtung 1 umfasst einen Behälter 2 zum Aufnehmen einer zu kühlenden Flüssigkeit, beispielsweise Zugabewasser zur Herstellung von Frischbeton, sowie einen innerhalb des Behälters 2 angeordneten Wärmetauscher 3. Der Behälter 2 ist mit einer Zuleitung 4 für die Zuführung der zu kühlenden Flüssigkeit und mit einer Ausleitung 5 zum Abführen der gekühlten Flüssigkeit ausgerüstet. In der Zuleitung 4 und der Ausleitung 5 ist jeweils ein Ventil 6, 7 zum Steuern des Mengenflusses der Flüssigkeit vorgesehen.

Der Wärmetauscher 3 umfasst eine Wärmetauscherfläche 8 in Form einer Rohrschlange, die an eine Zuleitung 9 für ein flüssiges Kühlmedium, im Ausführungsbeispiel ein kryogenes Kühlmedium wie beispielsweise Flüssigstickstoff angeschlossen ist. In der Zuleitung 9 ist ein Ventil 10 zum Steuern des Zuflusses an Kühlmedium angeordnet. Die bevorzugt aus einem Rippenrohr bestehende Rohrschlange der Wärmetauscherfläche 8 umfasst eine Mehrzahl von übereinander angeordneten Windungen 11a, 11b, 11c, 11d, die vertikal voneinander beabstandet sind, also vollständig von umgebender Flüssigkeit umströmt werden. Die Querschnittsflächen der Windungen 11a, 11b, 11c, 11d werden von der Einmündung der Zuleitung 9 nach unten immer größer und formen so im hier gezeigten Beispiel eine pyramidenförmige Spirale mit einer rechteckigen Pyramidengrundfläche und einer senkrechten Achse. Im Übrigen ist es im Rahmen der Erfindung ebenso gut vorstellbar, dass die Windungen eine zylindrische oder eine sich nach oben öffnende oder schräg im Behälter 2 angeordnete konische Spirale beschreiben. Weiterhin kann die Wärmetauscherfläche 8 auch mehr oder weniger als die hier gezeigten vier Windungen 11a, 11b, 11c, 11d umfassen.

Die geodätisch unterste Windung 11d mündet in eine Gasrückleitung 12, über die das im Wärmetauscher 3 verdampfte Kühlmedium abgeführt wird. Außerhalb des Behälters 2 zweigt von der Gasrückleitung 12 eine Gasleitung 13 ab, mittels der zumindest ein Teil des verdampften Kühlmediums zu einer Eintragseinrichtung 14 geleitet werden kann, die im Behälter 2 geodätisch unterhalb der Wärmetauscherfläche 8 angeordnet ist. Die Mengenanteile an zur Eintragseinrichtung 14 abgezweigtem bzw. abgeführtem Gases können mittels Ventilen 15a, 15b manuell oder automatisch nach einem Programm, etwa in Abhängigkeit eines gemessenen Parameters, geregelt werden.

Bei der Eintragseinrichtung 14 handelt es sich um einen rohrförmigen oder eine sonstige Geometrie aufweisenden Hohlkörper, der mit Austrittsöffnungen für verdampftes Kühlmedium ausgerüstet ist. Beispielsweise handelt es sich bei der Eintragseinrichtung 14 um ein Rohr, das mit einer Bohrung oder mit einer Mehrzahl an Bohrungen 16 ausgerüstet ist. Ebenso kann es sich dabei um einen gasdurchlässigen Sinterkörper oder um eine Anordnung mit mindestens einer selbstschließenden Düse handeln.

Im Betrieb der Vorrichtung 1 wird der Behälter 2 mit der zur kühlenden Flüssigkeit, also beispielsweise Zugabewasser, bis zu einer Höhe gefüllt, bei der die Wärmetauscherfläche 8 vollständig innerhalb eines Flüssigkeitsbades 17 vorliegt. Sodann wird das flüssige Kühlmedium, beispielsweise flüssiger Stickstoff, über die Zuleitung 9 eingeleitet. Der flüssige Stickstoff verdampft im thermischen Kontakt mit dem Zugabewasser an der Wärmetauscherfläche 8 zumindest teilweise, wobei sich das Flüssigkeitsbad 17 abkühlt. Der verdampfte Stickstoff strömt anschließend zumindest teilweise zur Eintragseinrichtung 14 und wird dort gasförmig in das Flüssigkeitsbad 17 eingetragen. Die entstehenden Gasblasen steigen im Flüssigkeitsbad 17 auf und führen zu einer aufsteigenden Strömung und einer intensiven Durchmischung des Flüssigkeitsbades 17. Die pyramidenförmige Anordnung der Windungen 11a, 11b, 11c, 11d gewährleistet dabei, dass alle Windungen 11a, 11b, 11c, 11d unmittelbar von der aufsteigenden Strömung im Flüssigkeitsbad 17 getroffen und von dieser umflossen werden. Dadurch wird die Entstehung einer Eisschicht auf den Außenwänden der Windungen 11a, 11b, 11c, 11d zumindest weitgehend unterbunden. Um zu verhindern, dass während einer Betriebspause Flüssigkeit aus dem Flüssigkeitsbad 17 in die Windungen 11a, 11b, 11c, 11d der Wärmetauscherfläche eindringt, verläuft die Gasleitung 13 zumindest abschnittsweise oberhalb der Höhe des Flüssigkeitsbades 17.

Der verdampfte Stickstoff sammelt sich über dem Flüssigkeitsbad 17 in einer Gasphase 18 in einem oberen Bereich des Behälters 2 an. Er strömt über eine Abgasleitung 19 ab, in der er mit dem nicht zur Eintragseinrichtung 14 geführten Teil des verdampften Stickstoff aus der Gasrückleitung 12 zusammengeführt wird. Der Stickstoff kann anschließend in die Umgebung entlassen oder einer sonstigen Verwendung zugeführt werden. Zur Kontrolle der abströmenden Gasmenge dient ein Ventil 20 mit Sicherheitsventil 21.

Die Temperatur im Flüssigkeitsbad 17 wird an einem Temperaturmesser 22 laufend kontrolliert. Sobald eine vorgegebene Temperatur von beispielsweise zwischen 1°C und 6°C erreicht ist, kann das Zugabewasser über die Ausleitung 5 entnommen und seiner beabsichtigten Verwendung zugeführt werden.

Die Temperatur des Flüssigkeitsbades 17 kann mittels einer Steuereinheit 23, die mit dem Temperaturmesser 20 und den Ventilen 10, 15a, 15b in Wirkverbindung steht, gesteuert werden. Hierzu wird der Mengenstrom des insgesamt durch die Leitung 9 geführten Kühlmediums und/oder der Mengenanteil des verdampften Kühlmediums, der über die Zweigleitung 13 zur Eintragseinrichtung 14 geführt wird, in Abhängigkeit von der gemessenen Temperatur nach einem vorgegeben Programm geregelt.

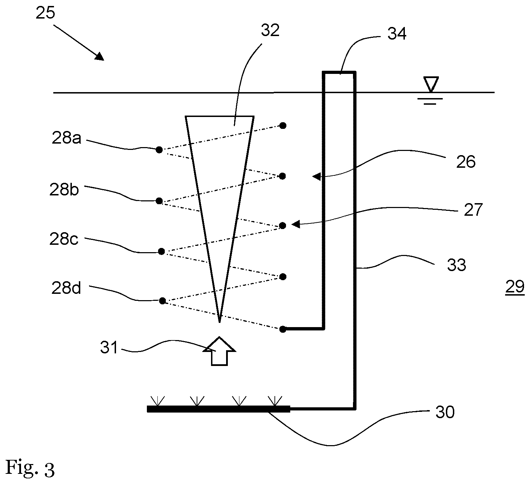

In Fig. 3 ist ein Wärmetauscher einer erfindungsgemäße Vorrichtung in einer anderen Ausführungsform gezeigt. Die dort gezeigte Vorrichtung 25 umfasst einen Wärmetauscher 26, der mit einer Wärmetauscherfläche 27 in Form einer vertikal angeordneten, zylindrischen Rohrschlange ausgerüstet ist. Die Wärmetauscherfläche 27 umfasst eine Mehrzahl von vertikal übereinander und beabstandet voneinander angeordneten Windungen 28a, 28b, 28c, 28d, die in einem beispielsweise aus Zugabewasser bestehenden Flüssigkeitsbad 29 angeordnet sind. Durch die Windungen 28a, 28b, 28c, 28d wird im Betrieb der Vorrichtung 25 flüssiger Stickstoff oder ein anderes verflüssigtes Gas geführt und im Wärmekontakt mit dem umliegenden Flüssigkeitsbad 29 verdampft, bevor er in Gasform an einer unterhalb des Wärmetauschers 26 angeordneten Eintragseinrichtung 30 in das Flüssigkeitsbad 29 eingetragen wird. Der Eintrag des Gases führt zu einer aufwärts gerichteten Strömung im Flüssigkeitsbad 29, entsprechend der Richtung des Pfeils 31.

Um die aufwärts gerichtete Strömung auf die Windungen 28a, 28b, 28c, 28d zu leiten, ist axial im Innern des Wärmetauschers 26 ein Strömungskörper 32 angeordnet. Der Strömungskörper 32 hat im hier gezeigten Ausführungsbeispiel die Form eines auf seiner Spitze stehenden Kegels und dient dazu, die durch das eingetragene Gas im Flüssigkeitsbad 29 induzierte Strömung in Richtung der den Strömungskörper 32 radial umgebenden Windungen 28a, 28b, 28c, 28d zu lenken. Durch die kontinuierliche Umströmung der Windungen 28a, 28b, 28c, 28d mit Flüssigkeit wird die Entstehung von Eisschichten auf der Außenoberfläche der Windungen 28a, 28b, 28c, 28b unterbunden. Auf diese Weise kann auch dann die Eisbildung wirksam verhindert werden, wenn sich die Windungen 28a, 28b, 28c, 28d in vertikaler Projektion ganz oder teilweise überdecken.

Der Strömungskörper 32 muss im Übrigen nicht zwingend die Form eines umgekehrten Kegels haben; vielmehr ist jede Form geeignet, die imstande ist, eine aufwärts gerichtete Strömung im Flüssigkeitsbad 29 in Richtung auf die Windungen 28a, 28b, 28c, 28d zu lenken.

Um zu verhindern, dass in Betriebspausen Wasser aus dem Flüssigkeitsbad 29 in die Windungen 28a, 28b, 28c, 28d eindringt und dort nach Wideraufnahme des Betriebs zu Eisbildung führt, wird die Strömungsverbindung zwischen dem Wärmetauscher 26 und der Eintragseinrichtung 30 über eine Leitung 33 hergestellt, die zumindest in einem Abschnitt 34 oberhalb des Flüssigkeitsbades 29 verläuft.

Die Erfindung ist im Übrigen nicht auf das hier gezeigte Ausführungsbeispiel beschränkt; insbesondere ist eine erfindungsgemäße Vorrichtung auch zur Kühlung anderer Flüssigkeiten als Zugabewasser einsetzbar und/oder kann mit anderen Kühlmedien als mit Flüssigstickstoff betrieben werden.

### Bezugszeichenliste

| | | | |
|---|---|---|---|
| 1 | Vorrichtung | 17 | Flüssigkeitsbad |
| 2 | Behälter | 18 | Gasphase |
| 3 | Wärmetauscher | 19 | Abgasleitung |
| 4 | Zuleitung | 20 | Ventil |
| 5 | Ausleitung | 21 | Sicherheitsventil |
| 6 | Ventil | 22 | Temperaturmesser |
| 7 | Ventil | 23 | Steuereinheit |
| 8 | Wärmetauscherfläche | 24 | - |
| 9 | Zuleitung (für flüssiges Kühlmedium) | 25 | Vorrichtung |
| | | 26 | Wärmetauscher |
| 10 | Ventil | 27 | Wärmetauscherfläche |
| 11a, 11b ,11c, 11d | Windung | 28a, 28b, 28c, 28d | Windung |
| 12 | Gasrückleitung | 29 | Flüssigkeitsbad |
| 13 | Leitung | 30 | Eintragseinrichtung |
| 14 | Eintragseinrichtung (für verdampftes Kühlmedium) | 31 | Pfeil |
| | | 32 | Strömungskörper |
| 15a, 15b | Ventil | 33 | Leitung |
| 16 | Bohrung | 34 | Abschnitt |

## Patentansprüche

1. Vorrichtung zum Kühlen von Flüssigkeiten durch Wärmekontakt mit einem kryogenen Medium, mit einem Behälter (2) zum Aufnehmen eines Flüssigkeitsbades (17, 29) einer zur kühlenden Flüssigkeit, mit einem im Flüssigkeitsbad (17, 29) angeordneten Wärmetauscher (3, 26) zum Kühlen der Flüssigkeit durch Wärmetausch mit einem verflüssigten kryogenen Kühlmedium, welcher Wärmetauscher (3, 26) mit einer Zuleitung (9) und einer Ausleitung (12) für das Kühlmedium sowie mit einer Wärmetauscherfläche (8, 27) zum indirekten Wärmetausch von Flüssigkeit und Kühlmedium ausgerüstet ist,
**dadurch gekennzeichnet,**
**dass** die Ausleitung (12) für das Kühlmedium über eine Verbindungsleitung (13, 33) mit einer unterhalb der Wärmetauscherfläche in das Flüssigkeitsbad (17, 29) ausmündenden Eintragseinrichtung (14, 30) zum Eintragen von verdampftem Kühlmedium in die Flüssigkeit strömungsverbunden ist.

2. Vorrichtung nach Anspruch 1, **dadurch gekennzeichnet, dass** die Wärmetauscherfläche (8, 27) eine Rohrschlange umfasst, deren Windungen (11a, 11b, 11c, 11d; 28a, 28b, 28c, 28b) um eine vertikal oder schräg nach oben verlaufende Achse angeordnet sind.

3. Vorrichtung nach Anspruch 2, **dadurch gekennzeichnet, dass** die Windungen (11a, 11b, 11c, 11d; 28a, 28b, 28c, 28d) der Rohrschlange derart ausgebildet sind, dass sich die Querschnittsflächen der Windungen (11a, 11b, 11c, 11d; 28a, 28b, 28c, 28b) von unten nach oben verkleinern oder vergrößern.

4. Vorrichtung nach Anspruch 2 oder 3, **dadurch gekennzeichnet, dass** im Behälter (2) Mittel vorgesehen sind, um eine von der Eintragseinrichtung (14, 30) ausgehende Strömung in Richtung auf die Windungen (11a, 11b, 11c, 11d; 28a, 28b, 28c, 28b) zu leiten.

5. Vorrichtung nach einem der vorhergehenden Ansprüche, **dadurch gekennzeichnet, dass** die Verbindungsleitung (13, 33) zumindest abschnittsweise oberhalb eines Flüssigkeitsbades (17, 29) im Behälter (2) verläuft.

6. Vorrichtung nach einem der vorhergehenden Ansprüche, **dadurch gekennzeichnet, dass** die Verbindungsleitung (13, 33) oder die Eintragseinrichtung (14, 30) mit Mitteln zum Verhindern des Einströmens von Flüssigkeit aus dem Flüssigkeitsbad (17, 29) ausgerüstet ist.

7. Vorrichtung nach einem der vorhergehenden Ansprüche, **dadurch gekennzeichnet, dass** die Eintragseinrichtung (14, 30) wenigstens eine Austrittsöffnung (16) aufweist, die mit einem selbstschließenden Ventil oder einem flüssigkeitsdichten, jedoch gasdurchlässigen Sinterkörper ausgerüstet ist.

8. Vorrichtung nach einem der vorhergehenden Ansprüche, **dadurch gekennzeichnet, dass** der Behälter (2) als geschlossener Behälter ausgebildet ist, der mit einer aus einem oberen Bereich des Behälters (2) ausmündenden Abgasleitung (19) ausgerüstet ist.

9. Vorrichtung nach einem der vorhergehenden Ansprüche, **gekennzeichnet durch** eine Regeleinrichtung (21) zum Regeln der Temperatur der Flüssigkeit im Behälter (2).

10. Vorrichtung nach einem der vorhergehenden Ansprüche, **dadurch gekennzeichnet, dass** es sich bei dem kryogenen Kühlmedium um flüssigen Stickstoff handelt.

11. Verwendung einer Vorrichtung (1, 25) nach einem der Ansprüche 1 bis 10 zur Kühlung von Zugabewasser in der Betonherstellung.

## Claims

1. Device for cooling liquids by heat contact with a cryogenic medium, having a container (2) for receiving a liquid bath (17, 29) of a liquid to be cooled, having a heat exchanger (3, 26) disposed in the liquid bath (17, 29) for cooling the liquid by exchanging heat with a liquefied cryogenic cooling medium, which heat exchanger (3, 26) is equipped with an inlet line (9) and an outlet line (12) for the cooling medium and with a heat exchanger surface (8, 27) for the indirect heat exchange between the liquid and the cooling medium,
**characterized in that**
the outlet line (12) for the cooling medium is fluidically connected via a connecting line (13, 33) to an introduction device (14, 30) which, below the heat exchanger surface, opens into the liquid bath (17, 29) for the introduction of evaporated cooling medium into the liquid.

2. Device according to Claim 1, **characterized in that** the heat exchanger surface (8, 27) comprises a pipe coil of which the coils (11a, 11b, 11c, 11d; 28a, 28b, 28c, 28b) are disposed about an axis extending vertically or obliquely upwards.

3. Device according to Claim 2, **characterized in that** the coils (11a, 11b, 11c, 11d; 28a, 28b, 28c, 28d) of the pipe coil are formed in such a manner that the cross-sectional areas of the coils (11a, 11b, 11c, 11d; 28a, 28b, 28c, 28b) decrease or increase in size from bottom to top.

4. Device according to Claim 2 or 3, **characterized in that** provided in the container (2) are means to direct a flow emanating from the introduction device (14, 30) in the direction of the coils (11a, 11b, 11c, 11d; 28a, 28b, 28c, 28b).

5. Device according to one of the preceding claims, **characterized in that** the connecting line (13, 33) at least in portions extends above a liquid bath (17, 29) in the container (2).

6. Device according to any one of the preceding claims, **characterized in that** the connecting line (13, 33) or the introduction device (14, 30) is equipped with means for preventing the inflow of liquid from the liquid bath (17, 29).

7. Device according to one of the preceding claims, **characterized in that** the introduction device (14, 30) has at least one exit opening (16) which is equipped with a self-closing valve or a liquid-tight but gas-permeable sintered body.

8. Device according to one of the preceding claims, **characterized in that** the container (2) is formed as a closed container which is equipped with an exhaust gas line (19) which leads out of an upper region of the container (2).

9. Device according to one of the preceding claims, **characterized by** a feedback-control device (21) for feedback-controlling the temperature of the liquid in the container (2).

10. Device according to one of the preceding claims, **characterized in that** the cryogenic cooling medium is liquid nitrogen.

11. Use of a device (1, 25) according to one of Claims 1 to 10 for the cooling of mixing water in concrete production.

## Revendications

1. Dispositif pour refroidir des liquides par contact thermique avec un milieu cryogénique, comprenant un récipient (2) destiné à recevoir un bain liquide (17, 29) d'un liquide à refroidir, avec un échangeur de chaleur (3, 26) agencé dans le bain liquide (17, 29) pour refroidir le liquide par échange thermique avec un fluide de refroidissement cryogénique liquéfié, ledit échangeur de chaleur (3, 26) étant équipé d'une conduite d'alimentation (9) et d'une conduite d'évacuation (12) pour le fluide de refroidissement, ainsi que d'une surface d'échange thermique (8, 27) pour l'échange thermique indirect entre le liquide et le fluide de refroidissement,
**caractérisé**
**en ce que** la conduite d'évacuation (12) pour le fluide de refroidissement est reliée fluidiquement, par l'intermédiaire d'une conduite de liaison (13, 33), à un dispositif d'introduction (14, 30) débouchant dans le bain de liquide (17, 29) en dessous de la surface d'échange thermique, pour introduire le fluide de refroidissement évaporé dans le liquide.

2. Dispositif selon la revendication 1, **caractérisé en ce que** la surface d'échange thermique (8, 27) comprend un serpentin tubulaire dont les spires (11a, 11b, 11c, 11d ; 28a, 28b, 28c, 28b) sont agencées autour d'un axe s'étendant verticalement ou obliquement vers le haut.

3. Dispositif selon la revendication 2, **caractérisé en ce que** les spires (11a, 11b, 11c, 11d ; 28a, 28b, 28c, 28d) du serpentin tubulaire sont conçues de telle sorte que les sections transversales des spires (11a, 11b, 11c, 11d ; 28a, 28b, 28c, 28b) diminuent ou augmentent de bas en haut.

4. Dispositif selon la revendication 2 ou la revendication 3, **caractérisé en ce que** des moyens sont prévus dans le récipient (2) pour diriger un écoulement provenant du dispositif d'introduction (14, 30) vers les spires (11a, 11b, 11c, 11d ; 28a, 28b, 28c, 28b).

5. Dispositif selon l'une des revendications précédentes, **caractérisé en ce que** la conduite de liaison (13, 33) s'étend au moins par sections au-dessus d'un bain de liquide (17, 29) présent dans le récipient (2).

6. Dispositif selon l'une des revendications précédentes, **caractérisé en ce que** la conduite de liaison (13, 33) ou le dispositif d'introduction (14, 30) est équipé de moyens pour empêcher l'entrée de liquide provenant du bain de liquide (17, 29).

7. Dispositif selon l'une des revendications précédentes, **caractérisé en ce que** le dispositif d'introduction (14, 30) présente au moins une ouverture de sortie (16) qui est équipée d'une soupape à fermeture automatique ou d'un corps fritté étanche aux liquides mais perméable aux gaz.

8. Dispositif selon l'une des revendications précédentes, **caractérisé en ce que** le récipient (2) est conçu sous la forme d'un récipient fermé équipé d'un conduit (19) d'évacuation des gaz, débouchant dans une zone supérieure du récipient (2).

9. Dispositif selon l'une des revendications précédentes, **caractérisé par** un dispositif de régulation (21) pour réguler la température du liquide dans le récipient (2).

10. Dispositif selon l'une des revendications précédentes, **caractérisé en ce que** le fluide de refroidissement cryogénique est de l'azote liquide.

11. Utilisation d'un dispositif (1, 25) selon l'une des revendications 1 à 10 pour refroidir l'eau de gâchage dans la fabrication de béton.
